# EUROPÄISCHE PATENTSCHRIFT

(11) **EP 3 480 362 B1**
(45) Veröffentlichungstag und Bekanntmachung des Hinweises auf die Patenterteilung: **06.09.2023**
(21) Anmeldenummer: 18000810.4
(22) Anmeldetag: 12.10.2018
(51) Int. Cl.: E01C 19/28, E01C 19/23, E01C 19/26, E01C 23/01, E01C 23/07, G01B 11/06, G01B 17/02

(54) **STRASSENWALZE UND VERFAHREN ZUR BESTIMMUNG DER EINBAUSCHICHTDICKE**
ROAD ROLLER AND METHOD FOR DETERMINING THE MOUNTING LAYER THICKNESS
ROULEAU DAMEUR ET PROCÉDÉ DE DÉTERMINATION DE L'ÉPAISSEUR DE COUCHE

(30) Priorität: 03.11.2017 DE 102017010238
(43) Veröffentlichungstag der Anmeldung: 08.05.2019
(73) Patentinhaber: BOMAG GmbH, 56154 Boppard (DE)
(72) Erfinder: Laugwitz, Niels, 56154 Boppard (DE)
(74) Vertreter: Heidler, Philipp

(56) Entgegenhaltungen:
- EP-A1- 2 535 458
- DE-A1- 10 234 217
- DE-A1- 10 356 516
- DE-A1-102009 044 581

## Beschreibung

Die Erfindung betrifft ein Verfahren zur Bestimmung einer Dicke einer durch einen Straßenfertiger eingebauten Einbauschicht. Die Erfindung betrifft weiter eine selbstfahrende Straßenwalze, insbesondere Tandemwalze oder Walzenzug, zur Verdichtung eines Bodens in einer Arbeitsrichtung.

Der Bau von Straßen und Plätzen sowie beispielsweise den Start- und Landebahnen von Flughäfen beginnt normalerweise damit, dass die zu bebauende Fläche geglättet und verdichtet wird. Auf die derart vorbereitete Fläche bringt dann ein Straßenfertiger das einzubauende Einbaugut, beispielsweise Asphalt, auf, indem er es quer über seine gesamte Arbeitsbreite verteilt, glatt abzieht und vorverdichtet. Hinter dem Straßenfertiger sind zumeist eine oder mehrere Walzen, beispielsweise Tandemwalzen oder Walzenzüge, im Einsatz, die die vom Straßenfertiger eingebaute Schicht weiter verdichten. Die Dicke der Einbauschicht nimmt dabei kontinuierlich ab bis ein optimaler Verdichtungsgrad erreicht ist, bei dem die fertig gestellte Straße oder der Platz beziehungsweise die Bahn eine maximale Lebens- beziehungsweise Nutzungsdauer aufweist. Beim Bau von Straßen, Plätzen und Landebahnen müssen typischerweise strenge Vorgaben an die erforderliche minimale Schichtdicke erfüllt werden. Gleichzeitig stellen die Kosten für das Einbaugut, von dem normalerweise viele Tonnen benötigt werden, einen maßgeblichen Faktor für die Wirtschaftlichkeit der entsprechenden Bauprojekte dar. Es besteht daher das Bedürfnis, die Mindestanforderungen an die Schichtdicke möglichst exakt zu erfüllen, um nicht unnötige Mengen an Einbaugut aufzubringen. Ein Straßenfertiger mit einer Schichtdickenmessvorrichtung ist aus der EP 2 535 485 A1 bekannt. Die DE 103 56 516 A1 offenbart ein Verdichtungssystem im Straßenbau.

Die Bestimmung der tatsächlichen Schichtdicke des eingebauten Materials nach der Verdichtung ist allerdings schwierig. Bisher wurde beispielsweise an den Nivellierzylinder der Einbaubohle des Straßenfertigers die von diesem zurückgelassene Schichtdicke gemessen, beispielsweise gemäß DE 102 34 217 A1. Diese, lediglich vorverdichtete Schicht, wird allerdings durch die nachfolgenden Straßenwalzen weiter verdichtet, so dass die Schichtdicke weiter abnimmt. Eine exakte Bestimmung der tatsächlich eingebauten Schichtdicke ist also nur nach der letzten Walzenüberfahrt möglich, womit sich auch die DE 10 2009 044 581 A1 befasst. Bisherige manuelle Verfahren zur Bestimmung der Schichtdicke sind allerdings aufwendig sowie zeit- und kostenintensiv.

Es ist daher die Aufgabe der vorliegenden Erfindung, eine Möglichkeit anzugeben, wie die Dicke der Einbauschicht zuverlässig, einfach und kostengünstig ermittelt beziehungsweise überwacht werden kann. Insbesondere soll die Einbauschicht im optimal verdichteten Zustand am Ende der Bauarbeiten ermittelt werden. Gleichzeitig soll ermöglicht werden, die Schichtdicke der Einbauschicht noch während der Einbauarbeiten anzupassen, um möglichst nah an den minimalen Erfordernissen zu bleiben.

Die Lösung der Aufgabe gelingt mit dem Verfahren und der selbstfahrenden Straßenwalze gemäß den unabhängigen Ansprüchen. Bevorzugte Weiterbildungen sind in den abhängigen Ansprüchen angegeben.

Konkret gelingt die Lösung mit einem Verfahren zur Bestimmung einer Dicke einer durch einen Straßenfertiger eingebauten Einbauschicht, umfassend die Schritte: Etablieren einer Höhenreferenz, Erstellen eines, insbesondere ortsabhängigen, Höhenprofils einer zu bebauenden Fläche, Einbau der Einbauschicht, Messen einer Höhenlage eines Höhenreferenzsensors einer selbstfahrenden Straßenwalze in Bezug zur Höhenreferenz, insbesondere an unterschiedlichen Punkten über der Einbauschicht, Messen der Lage des Höhenreferenzsensors in Bezug zum Boden, Ermitteln eines Höhenprofils der bebauten Fläche und Ermitteln der Dicke der Einbauschicht aus den beiden Höhenprofilen. Darüber hinaus kann auch die Lage des Höhenmesspunktes relativ zur Lage des Höhenreferenzsensors bestimmt werden, beispielsweise um eine Neigung der Straßenwalze auf dem Untergrund rechnerisch auszugleichen, wie nachstehend noch näher erläutert. Der Kerngedanke der vorliegenden Erfindung ist, die Dicke der eingebauten Schicht aus einer Differenz der absoluten Höhe der unbebauten Fläche und der bebauten Fläche gegenüber einer Höhenreferenz zu ermitteln. Beispielsweise könnte die Höhe der zu bebauenden Fläche, nachdem diese für das Bebauen mit dem Einbaumaterial vorbereitet worden ist, gegenüber einer Höhenreferenz gemessen und gespeichert werden. Obwohl es grundsätzlich auch ausreichen würde, die Höhe punktuell festzustellen, ist bevorzugt, dass die Höhe der unbebauten Fläche flächig beziehungsweise kontinuierlich gemessen wird. Auf diese Weise wird ein Höhenprofil, insbesondere ein dreidimensionales Höhenprofil, der zu bebauenden Fläche erstellt. Nachdem dann, erfindungsgemäß von einem Straßenfertiger, die Schicht Einbaugut auf den zu bebauenden Boden aufgebracht worden ist und ebenfalls nachdem diese Schicht bis zum optimalen Verdichtungsgrad verdichtet wurde, wird die Messung wiederholt und die Höhe der Oberfläche der eingebauten Schicht gegenüber der Höhenreferenz bestimmt. Auf diese Weise wird ein weiteres Höhenprofil, diesmal von der bebauten Fläche, erstellt. Durch einen Vergleich der beiden Höhenprofile, beispielsweise durch eine Differenz des Höhenprofils der bebauten Fläche minus dem Höhenprofil der unbebauten, zu bebauenden Fläche kann dann die Schichtdicke, die vom Straßenfertiger eingebaut wurde und auf die das eingebaute Material verdichtet worden ist, ermittelt werden. Es ist besonders vorteilhaft, wenn die Höhenprofile der unbebauten und der bebauten Fläche von den mobilen Arbeitsmaschinen bestimmt werden, die diese Flächen sowieso während des Einbaus des Einbaugutes überfahren. Erfindungsgemäß soll also das Höhenprofil der zu bebauenden Fläche von den Bodenverdichtern beziehungsweise Straßenwalzen, die die Verdichtung zur Vorbereitung der Fläche durchführen, vermessen werden. Auch der Straßenfertiger fährt über die unbebaute, noch zu bebauenden Fläche und kann daher dieses Höhenprofil aufnehmen. Das Höhenprofil der bebauten Fläche, also der Oberfläche der eingebauten Schicht, wird erfindungsgemäß von den Straßenwalzen aufgenommen, die die Einbauschicht hinter dem Straßenfertiger verdichten. Auf diese Weise kann die Ermittlung bei der letzten Überfahrt der Straßenwalzen über die Einbauschicht erfolgen, sodass die tatsächlich von den Straßenwalzen hinterlassene Schichtdicke ermittelbar ist.

Grundsätzlich kommt für die Erfindung jede Höhenreferenz infrage, die eine ausreichende Genauigkeit aufweist. Beispielsweise kann ein Höhenreferenzsensor eingesetzt werden, der seine Höhenlage im Vergleich zum Meeresspiegel misst. Da derartige Systeme allerdings von äußeren Faktoren abhängige Schwankungen aufweisen, ist es schwierig, hier die erforderliche Genauigkeit zu erreichen. Besonders bevorzugt ist es daher, wenn ein lokales Höhenreferenzsystem verwendet wird. Beispielsweise kann ein System eingesetzt werden, das mehrere entlang der zu bebauenden Fläche verteilte Referenzstationen aufweist, und das die Höhenlage des Höhenreferenzsensors in Relation zu diesen Referenzstationen misst. Auch durch die Messung der relativen Lage zu diesen Referenzstationen vor und nach dem Einbau der Einbauschicht können die beschriebenen Höhenprofile gewonnen werden. Die genaue Position des Höhenreferenzsensors im Raum kann dabei beispielsweise im Zusammenspiel mit einem satellitengestützten Positionierungssystem (beispielsweise GPS) oder über ein Triangulierungsverfahren von den Referenzstationen ermittelt werden. Insgesamt ist es bevorzugt, dass ein System eingesetzt wird, das in der Lage ist, die dreidimensionale Lage des Höhenreferenzsensors in Bezug zu den Referenzstationen zu ermitteln. Derartige Systeme sind grundsätzlich bekannt und werden daher nicht näher erläutert.

Um mit derartigen Höhenreferenzsensoren die entsprechenden Höhenprofile über ein möglichst großes Gebiet hinweg erstellen zu können, muss der Höhenreferenzsensor typischerweise möglichst weit vom Boden entfernt, sprich möglichst weit oben, an den Baumaschinen befestigt werden. Was dann allerdings tatsächlich gemessen wird, ist die Position des Höhenreferenzsensors, die nicht mit der Höhe der aktuellen Standfläche der Baumaschine auf dem zu bebauenden oder auf dem bebauten Boden übereinstimmt. Problematisch ist weiterhin, dass der Abstand des Höhenreferenzsensors auf der Baumaschine zum Boden nicht konstant ist. Im Arbeitsbetrieb treten in den Baumaschinen Schwingungen auf, beispielsweise durch den Betrieb von vibrierenden Walzenbandagen oder durch die Fahrwerksfederungen, so dass der Höhenreferenzsensor unregelmäßig und unvorhersehbar gegenüber dem Boden beziehungsweise der Standfläche der Baumaschine auf- und abschwingt. Typischerweise weisen Baumaschinen Federung mit mehreren Zentimetern Federweg auf. Eine exakte Bestimmung der Höhenlage des Höhenreferenzsensors in Bezug zur Höhenreferenz, die eine auf wenige Millimeter genaue Bestimmung der Schichtdicke der Einbauschicht erlauben würde, ist daher grundsätzlich allein aufgrund der Höhenlage des Höhenreferenzsensors nicht möglich. Auch beispielsweise durch den Einsatz von Filteralgorithmen, die in der Lage sind, die Schwingungen der Höhenlage des Höhenreferenzsensors zu einem gewissen Teil aus den Messwerten heraus zu rechnen, lässt sich keine ausreichende Genauigkeit für die Schichtdickenmessung erreichen. Es ist daher ein Kerngedanke der vorliegenden Erfindung, dass zusätzlich zur Höhenlage des Höhenreferenzsensors in Bezug zur Höhenreferenz ebenfalls die Lage des Höhenreferenzsensors in Bezug zum Boden bestimmt wird, beispielsweise durch einen Abstandssensor. Dadurch ermöglicht die Erfindung eine hochgenaue Fehlerkorrektur in Bezug auf die Schwingungen beziehungsweise Vibrationen des Höhenreferenzsensors am Maschinenrahmen der Straßenwalze. Die Lage des Höhenreferenzsensors in Bezug zum Boden wird entweder ebenfalls punktuell gleichzeitig mit der Messung der Höhenlage des Höhenreferenzsensors durchgeführt, oder ebenfalls flächig beziehungsweise kontinuierlich. Es ist daher bevorzugt zu jedem Zeitpunkt der Abstand zwischen dem Höhenreferenzsensor und der Standfläche der Baumaschine bekannt. Dieser Wert kann dann dazu benutzt werden, zusammen mit der gemessenen Höhenlage des Höhenreferenzsensors im Bezug zur Höhenreferenz die Höhenlage des Bodens beziehungsweise der Standfläche gegenüber der Höhenreferenz zu bestimmen. Der Abstand des Höhenreferenzsensors zum Boden beziehungsweise der Standfläche der Baumaschine schwankt mit der Federung beziehungsweise mit der Vibration der Baumaschine, gibt aber zu jedem Zeitpunkt den tatsächlichen Abstand des Höhenreferenzsensors zum Boden an. Durch die Messung des tatsächlichen Abstandes kann erfindungsgemäß auf die Schätzung des Fehlers der Höhenlage des Höhenreferenzsensors durch die Schwingungen beziehungsweise Vibrationen der Baumaschine verzichtet werden, wodurch die Genauigkeit der Schichtdickenermittlung verbessert wird.

Die Erfindung ermöglicht die genaue Bestimmung der Schichtdicke der Einbauschicht mit der letzten Überfahrt der Straßenwalze. Da beispielsweise der Straßenbau kontinuierlich erfolgt, ist diese letzte Überfahrt in einem Bereich der Straße abgeschlossen, während der Straßenfertiger noch weiter Einbaugut in einem weiter entfernten Abschnitt des zu bebauenden Gebietes einbaut. Durch die abschließende Messung der resultierenden, optimal verdichteten Schichtdicke der Einbauschicht wird nun allerdings eine Rückmeldung gewonnen, inwiefern die vom Straßenfertiger verlegte Einbaumaterialmenge ausreichend ist, um die minimalen Anforderungen an die Dicke der Schicht zu erfüllen, oder inwiefern zu viel Einbaumaterial aufgetragen wird. Es ist daher bevorzugt, dass ein Anpassen der aktuellen Einbaudicke durch den Straßenfertiger anhand der ermittelten Dicke der Einbauschicht erfolgt. Beispielsweise werden die gemessenen Werte der fertig verdichteten Schichtdicke kabellos von der Straßenwalze an den Straßenfertiger übertragen, so dass der Bediener des Straßenfertigers die von diesem aufgebrachte, noch nicht vollständig verdichtete Schichtdicke anpassen kann. Ebenfalls denkbar ist es, dass die Anpassung der Schichtdicke durch den Asphaltfertiger automatisch anhand der von der Straßenwalze übermittelten gemessenen Dicke der optimal verdichteten Schicht erfolgt. Auf diese Weise kann vermieden werden, dass zu viel Einbaumaterial eingebaut wird, wodurch der gesamte Prozess wirtschaftlicher und umweltschonender abläuft. Darüber hinaus kann ebenfalls vermieden werden, dass die minimalen Anforderungen nicht erreicht werden, wodurch ansonsten notwendige Nachbesserungen vermieden werden. Durch die kontinuierliche Messung der resultierenden Schichtdicke und deren Rückmeldung an den Straßenfertiger wird ein kontinuierlich arbeitendes System mit einer bestmöglichen Kontrolle des Arbeitsergebnisses, noch während der Einbau läuft, ermöglicht.

Die Lösung der eingangs genannten Aufgabe gelingt ebenfalls mit einer selbstfahrendem Straßenwalze, insbesondere einer Tandemwalze oder einem Walzenzug, zur Verdichtung eines Bodens in einer Arbeitsrichtung, mit einem Maschinenrahmen, einem Antriebsaggregat, und einer Steuereinrichtung, wobei eine Sensoreinrichtung zur Bestimmung einer Dicke einer Einbauschicht vorgesehen ist, wobei die Sensoreinrichtung einen Höhenreferenzsensor und einen Abstandssensor umfasst, wobei der Höhenreferenzsensor zur Messung seiner Höhenlage in Bezug zu einer Höhenreferenz und der Abstandssensor zur Messung der Lage des Höhenreferenzsensors in Bezug auf den Boden ausgebildet ist, und wobei die Steuereinrichtung dazu ausgebildet ist, aus den Messungen der Sensoreinrichtung und einer vorgegebenen Referenzhöhe die Dicke der Einbauschicht zu ermitteln. Die erfindungsgemäße Straßenwalze führt zumindest in Teilen das vorstehend beschriebene Verfahren durch. Die Steuereinrichtung ist beispielsweise in den Bordcomputer der Straßenwalze integriert und mit einer entsprechenden Software ausgestattet. Es ist allerdings auch möglich, dass die Steuereinrichtung getrennt von der Straßenwalze vorgesehen ist, beispielsweise als zentrale Steuereinrichtung oder als Steuereinrichtung auf einer weiteren mobilen Arbeitsmaschine, beispielsweise einer anderen Straßenwalze oder einem Straßenfertiger. Die Steuereinrichtung kann ebenfalls über das Internet mit der Straßenwalze in Verbindung stehen und an einen völlig anderen Ort, beispielsweise auf einem Server, angeordnet sein. Die Sensoreinrichtung der selbstfahrenden Straßenwalze kann sowohl dazu eingesetzt werden, das Höhenprofil der zu bebauenden Fläche als auch das Höhenprofil der bebauten Fläche zu ermitteln. Das Höhenprofil der zu bebauenden Fläche, das die dreidimensionale Höhenlage der Oberfläche der zu bebauenden Fläche gegenüber der Höhenreferenz beinhaltet, wird als vorgegebene Referenzhöhe eingesetzt. Die Ermittlung der Dicke der Einbauschicht wird von der Steuereinrichtung beispielsweise durch die Differenz der beiden Höhenprofile berechnet. Bezogen auf einen einzelnen Punkt bedeutet dies beispielsweise, dass die Steuereinrichtung die Höhenlage der unbebauten Fläche an diesem speziellen Punkt in Bezug auf die Höhenreferenz von der Höhenlage des selben Punktes der bebauten Fläche in Bezug auf die Höhenreferenz abzieht und so zur Schichtdicke der eingebauten Schicht an diesem Punkt gelangt. Durch eine flächige beziehungsweise kontinuierliche Messung der Höhenprofile kann die Schichtdicke der gesamten Einbauschicht an jeder Stelle ermittelt werden.

Wie bereits beschrieben sollte der Höhenreferenzsensor, um über einen möglichst großen Bereich mit der Höhenreferenz kommunizieren zu können, möglichst weit vom Boden entfernt an der Straßenwalze angeordnet seien. Beispielsweise ist es möglich, den Höhenreferenzsensor am Maschinenrahmen, beispielsweise am Fahrerstand der Straßenwalze, anzuordnen. Eine besonders einfache Bestimmung des Abstandes des Höhenreferenzsensors zum Boden gelingt dann, wenn der Abstandssensor dazu ausgebildet ist, den senkrechten Abstand zwischen dem Höhenreferenzsensor und dem Boden zu bestimmen. Der Abstandssensor misst also mit anderen Worten die Distanz zwischen dem Höhenreferenzsensor und der Standfläche der Straßenwalze in Normalenrichtung der Standfläche beziehungsweise des Bodens. In dieser Ausführungsform misst der Abstandssensor also den kürzesten Abstand zwischen dem Höhenreferenzsensor und dem Boden, wodurch dieser Abstand auch unmittelbar zur Berechnung des tatsächlichen Abstandes zwischen der Höhenlage des Höhenreferenzsensors und der Höhenlage des Bodens eingesetzt werden kann.

In einer alternativen Ausführungsform ist es ebenfalls möglich, dass der Abstandssensor dazu ausgebildet ist, den senkrechten Abstand zwischen dem Höhenreferenzsensor und einer Walzenbandage der Straßenwalze, insbesondere dem vom Boden abgewandten Scheitel der Walzenbandage, zu bestimmen, wobei die Steuereinrichtung dazu ausgebildet ist, den Durchmesser der Walzenbandage bei der Ermittlung der Dicke der Einbauschicht zu berücksichtigen. Der bodenabgewandte Scheitel der Walzenbandage beschreibt den obersten Punkt beziehungsweise die oberste Linie auf der Mantelfläche der Walzenbandage. Da die Walzenbandage der Straßenwalze nur sehr geringem Verschleiß unterliegt, kann der Durchmesser der Walzenbandage praktisch als konstant angesehen werden. Der dadurch entstehende Fehler ist klein genug, so dass eine neue Kalibrierung des Abstandssensors beispielsweise einmal jährlich ausreicht, um merkliche Fehler zu vermeiden. Da der Durchmesser der Walzenbandage also als bekannt angesehen werden kann, ist es möglich, den Abstand des Höhenreferenzsensors zum oberen Scheitel der Walzenbandage zu messen und den Durchmesser der Walzenbandage mit diesem gemessenen Abstand zu addieren, um den Abstand des Höhenreferenzsensors zum Boden beziehungsweise der Standfläche der Straßenwalze zu ermitteln. Der Vorteil der Messung des Abstands zur Walzenbandage gegenüber einer Messung des Abstandes zum Boden liegt darin, dass der Abstandssensor typischerweise Signale aussendet, beispielsweise Ultraschall- oder Lasersignale, die von der Oberfläche, auf die sie auftreffen, reflektiert werden müssen, damit der Abstandssensor die reflektierten Signale auswerten und dadurch den Abstand berechnen kann. Die äußere Umfangsfläche der Walzenbandage ist typischerweise glatt und weist bessere Reflektionseigenschaften auf als der Boden selbst.

Grundsätzlich könnte der Abstandssensor derart drehbar an der Straßenwalze befestigt sein, dass seine Messrichtung immer zum Erdmittelpunkt, sprich parallel zur Gewichtskraft, ausgerichtet ist. Auf diese Weise kann der Abstand des Höhenreferenzsensors zum Boden auch dann korrekt bestimmt werden, wenn die Straßenwalze auf einer geneigten Fläche steht beziehungsweise fährt. Da eine derartige Aufhängung des Abstandssensors allerdings wiederum durch die Vibrationen der Straßenwalze fehleranfällig ist, ist es alternativ bevorzugt, dass ein Neigungssensor vorhanden ist, der eine Neigung der Straßenwalze in und/oder quer zur Arbeitsrichtung misst, und dass die Steuereinrichtung dazu ausgebildet ist, die Neigung der Straßenwalze bei der Ermittlung der Dicke der Einbauschicht zu berücksichtigen. Der Abstandssensor misst also immer den Abstand zur Standfläche der Straßenwalze in Normalenrichtung. Um den durch eine Neigung des Bodens verursachten Messfehler auszugleichen, ist wenigstens ein Neigungssensor an der Straßenwalze vorgesehen, der dazu ausgebildet ist, die Abweichung der Ausrichtung der Straßenwalze von einer horizontalen Lage zu detektieren und quantitativ zu bestimmen. Die jeweils aktuelle Neigung der Straßenwalze kann dann für eine Koordinatentransformation von der gemessenen Höhenlage des Höhenreferenzsensors zum Aufstandspunkt der Straßenwalze genutzt werden. Auf diese Weise kann auch bei unebenen beziehungsweise geneigten Standflächen ein korrektes Höhenprofil des Bodens gegenüber der Höhenreferenz erstellt werden. Hierbei kann zur Erreichung der bestmöglichen Genauigkeit die momentane Quer- und Längsneigung der Straßenwalze bestimmt werden. Mit Hilfe der Neigungsinformation ist es möglich, die dadurch hervorgerufene Änderung der Höhe des Höhenreferenzsensors auszugleichen. Bei einer Neigung der Fahrbahnoberfläche von nur 3% und einer Anbauhöhe des Höhenreferenzsensors von 3000 mm (übliche Dachhöhe Fahrerstand) wäre der Höhenreferenzsensor gegenüber einer horizontalen Referenzebene ca. 1 mm zu tief. Zusätzlich ist der Messpunkt 90 mm in der horizontalen Richtung verschoben. Die tatsächliche Sollhöhe ist somit 2,7 mm höher oder tiefer, weil der Höhenreferenzsensor sich nicht senkrecht über der Messstelle befindet, sondern entsprechend der Neigung und Anbringungshöhe verschoben ist.

Die örtliche Neigung der Oberfläche kann entweder durch direkte Neigungsmessung auf der Walze erfolgen, oder über die topografischen Daten, die zuvor vom Straßenfertiger erzeugt wurden. Am Straßenfertiger werden häufig bereits Querneigungsdaten der Einbaubohle erfasst. Die Längsneigung kann aus den Messdaten eines Höhenreferenzsensors am Fertiger ermittelt werden. Gemäß einer bevorzugten Ausführungsform ist daher vorgesehen, dass die Neigung des Höhenreferenzsensors beziehungsweise der Straßenwalze in und/oder quer zur Arbeitsrichtung anhand von topographischen Daten der Einbauschicht ermittelt wird, und dass die Steuereinrichtung dazu ausgebildet ist, die Neigung des Höhenreferenzsensors beziehungsweise der Straßenwalze bei der Ermittlung der Dicke der Einbauschicht zu berücksichtigen. Die topographischen Daten der Einbauschicht wurden beispielsweise vom Straßenfertiger oder durch ein alternatives System erstellt und werden der Steuereinrichtung vorgegeben. Sofern die Walze auf kartierte Neigungsdaten vom Straßenfertiger zurückgreifen kann, erübrigt sich die Messung der Fahrbahnneigung mit Sensoren auf der Straßenwalze.

Da die meisten üblichen Sensortypen vergleichsweise empfindlich sind und die Gefahr besteht, dass diese durch zu starke Erschütterungen beschädigt werden, ist es bevorzugt, dass der Höhenreferenzsensor und/oder der Abstandssensor schwingungsentkoppelt an der Straßenwalze angeordnet ist/sind. Da der Abstandssensor kontinuierlich den Abstand des Höhenreferenzsensors zum Boden bestimmt, können Messfehler im Höhenprofil des Bodens durch Schwingungen des Abstandssensors und des Höhenreferenzsensors ausgeschlossen werden. Es kann also zur Schonung der Sensoren auch eine sehr weiche Aufhängung an der Straßenwalze Verwendung finden.

Um sicherzustellen, dass der Abstandssensor den Abstand des Höhenreferenzsensors zum Boden immer korrekt bestimmen kann, ist es bevorzugt vorgesehen, dass der Höhenreferenzsensor und der Abstandssensor derart an der Straßenwalze angeordnet sind, dass der Abstand des Höhenreferenzsensors und des Abstandssensors zueinander immer gleich ist. Beispielsweise ist es bevorzugt, dass der Höhenreferenzsensor und der Abstandssensor derart starr miteinander verbunden sind, dass sich der Abstand zwischen den beiden Sensoren auch bei starken Vibrationen der Straßenwalze nicht ändert. Auf diese Weise kann der konstante Abstand zwischen den Sensoren in den Abstand des Höhenreferenzsensors zum Boden verrechnet werden. In einer alternativen Ausführungsform sind der Höhenreferenzsensor und der Abstandssensor derart an der Straßenwalze angeordnet, dass der Abstand des Höhenreferenzsensors und des Abstandssensors vom Boden gleich ist. Auf diese Weise kann der vom Abstandssensor gemessene Abstand zum Boden direkt als Abstand des Höhenreferenzsensors zum Boden verwendet werden.

Besonders bevorzugt ist es ebenfalls, wenn der Höhenreferenzsensor und der Abstandssensor als gemeinsame Baueinheit an der Straßenwalze angeordnet und starr miteinander verbunden sind. Auf diese Weise ist der Abstand der beiden Sensoren zueinander immer gleich, so dass der Abstand des Höhenreferenzsensors zur Standfläche der Straßenwalze zuverlässig und einfach ermittelbar ist. Darüber hinaus ist die Montage des Höhenreferenzsensors und des Abstandssensors als gemeinsame Baueinheit besonders einfach und eignet sich ebenfalls als Nachrüstsatz für bereits bestehende Maschinen. Der Höhenreferenzsensor und der Abstandssensor bilden also ein einziges Modul, beispielsweise mit einem gemeinsamen Gehäuse, das als einzelne Einheit an der Straßenwalze montier-bar ist. Es ist daher nicht notwendig, den Höhenreferenzsensor und den Abstandssensor separat zu montieren und dann darüber hinaus auch noch den Abstand zwischen den Sensoren zu kalibrieren, damit die Bestimmung des Abstandes des Höhenreferenzsensors zum Boden durch den Abstandssensor funktionieren kann.

Grundsätzlich kann jede verfügbare Technik für den Höhenreferenzsensor und den Abstandssensor eingesetzt werden. So kann der Höhenreferenzsensor beispielsweise ein eigenständiger Sensor sein, der die absolute Höhe der Straßenwalze beispielsweise gegenüber dem Meeresspiegel ermittelt. Der Abstandssensor kann beispielsweise als Ultraschallsensor oder als Radarsensor, insbesondere als Radarsensor mit kleiner Wellenlänge, ausgebildet sein. Als kleine Wellenlänge werden Radarwellenlängen im Millimeterbereich angesehen, mit denen sich die Abstände mit der nötigen Genauigkeit messen lassen. Besonders bevorzugt ist es allerdings, dass der Höhenreferenzsensor als Laserhöhensensor ausgebildet ist und/oder der Abstandssensor als Laserdistanzsensor ausgebildet ist, die besonders zuverlässig sind. Als Höhenreferenz können beispielsweise im Stand der Technik bekannte Lasertransceiver als Referenzstationen beziehungsweise Basisstationen zur Triangulierung in in an sich bekannter Weise eingesetzt werden. Ein erfindungsgemäßes Walzsystem zur Bestimmung der Dicke der durch einen Straßenfertiger eingebauten Einbauschicht umfasst daher beispielsweise eine hierin beschriebene selbstfahrende Straßenwalze und wenigstens eine von der selbstfahrenden Straßenwalze separate, stationäre Höhenreferenzstation, die beispielsweise als Lasertransceiver ausgebildet ist. Auch mit einem derartigen Walzsystem gelingt die Lösung der eingangs genannten Aufgabe.

Die gemessenen Höhenprofile werden bevorzugt von der Steuereinrichtung gespeichert, so dass diese auch zu einem späteren Zeitpunkt ausgelesen und/oder ausgewertet werden können. Darüber hinaus ist es bevorzugt, dass der Bediener der Straßenwalze während der Arbeit ein direktes Feedback über die Schichtdicke und/oder die Höhenprofile des Bodens erhält. Es ist daher bevorzugt, dass die Steuereinrichtung dazu ausgebildet ist, eine dreidimensionale Topographie der Dicke der Einbauschicht zu erstellen, und eine Anzeigeeinrichtung umfasst, die dazu ausgebildet ist, dem Bediener der Straßenwalze die erstellte Topographie anzuzeigen. Die Steuereinrichtung erstellt mit anderen Worten ein dreidimensionales Abbild der gemessenen Höhenprofile und zeigt dieses dem Bediener als modellierte dreidimensionale Abbildung an. Auf diese Weise kann der Bediener die Schichtdicke in verschiedenen Regionen des Arbeitsgebietes direkt kontrollieren und deren Verlauf während der Arbeit beobachten.

Die Erfindung geht allerdings über eine rein passive Beobachtung des Arbeitsergebnisses hinaus. Da die Straßenwalze dazu ausgebildet ist, die eingebaute Schichtdicke kontinuierlich während der Arbeit zu ermitteln, ergibt sich die Möglichkeit, aufgrund der ermittelten Informationen eine Anpassung des Arbeitsbetriebes vorzunehmen, beispielsweise, indem die vom Straßenfertiger eingebaute Schichtdicke variiert wird. In einem diesbezüglichen Aspekt ist es daher bevorzugt, dass bei der selbstfahrenden Straßenwalze eine Sendeeinheit zu drahtlosen Kommunikation vorhanden ist, und dass die Steuereinheit dazu ausgebildet ist, die ermittelte Dicke der Einbauschicht über die Sendeeinheit an einen Straßenfertiger zu übermitteln. Die Übermittlung kann dabei entweder direkt von der Straßenwalze zum Straßenfertiger, oder indirekt über eine Basisstation erfolgen. Wichtig ist lediglich, dass die Straßenwalze die von ihr ermittelte Schichtdicke der Einbauschicht an die weiteren Baumaschinen auf der Baustelle und insbesondere an den Straßenfertiger weitergibt.

Der Straßenfertiger wiederum ist dazu ausgebildet, die von der Straßenwalze übermittelte Dicke der Einbauschicht zu empfangen und anhand dieser Daten die aktuelle Einbaudicke der Einbauschicht anzupassen. Je nachdem, ob die von der Straßenwalze festgestellte Schichtdicke also unter oder über der minimalen Anforderung an die Dicke der eingebauten Schicht liegt, kann der Straßenfertiger mehr oder weniger Material auf die zu bebauende Fläche aufbringen. Entweder ist der Straßenfertiger dabei dazu ausgebildet, die von der Straßenwalze ermittelte Schichtdicke einem Bediener anzuzeigen, oder der Straßenfertiger ist dazu ausgebildet, die Menge an Einbaumaterial, die er pro Fläche ausbringt, automatisch anhand der Daten zur Schichtdicke anzupassen. Ein erfindungsgemäßes Walzsystem zum Einbau einer Einbauschicht, mit dem ebenfalls die Lösung der eingangs genannten Aufgabe gelingt, umfasst wenigstens eine vorstehend beschriebene Straßenwalze und einen derartigen Straßenfertiger.

Sämtliche vorstehend und in der folgenden Figurenbeschreibung beschriebenen Merkmale sowie Wirkungen und Vorteile des erfindungsgemäßen Verfahrens, der erfindungsgemäßen selbstfahrendem Straßenwalze und der erfindungsgemäßen Walzsysteme gelten jeweils ebenfalls im übertragenen Sinne für das Verfahren, die Straßenwalze und die Walzsysteme, auch wenn diese zur Vermeidung von Wiederholungen nur für jeweils einen dieser Aspekte wortwörtlich genannt sind. Insbesondere umfasst das Verfahren auch sämtliche bei den Vorrichtungen beschriebenen Vorgänge und die Vorrichtungen sind zur Durchführung des Verfahrens ausgebildet.

Die Erfindung wird nachstehend anhand der in den Figuren gezeigten Ausführungsbeispiele näher erläutert. Es zeigen schematisch:
- Figur 1:: eine Seitenansicht einer Tandemwalze;
- Figur 2:: eine Seitenansicht eines Walzenzuges;
- Figur 3:: den Aufbau eines Höhenreferenzsystems entlang einer zu bearbeitenden Fläche;
- Figur 4:: die Erstellung der Höhenprofile vor und nach dem Einbau der Einbauschicht durch eine Straßenwalze;
- Figur 5:: die Erstellung der Höhenprofile vor und nach dem Einbau der Einbauschicht durch eine Straßenwalze und einen Straßenfertiger; und
- Figur 6:: ein Ablaufschema des Verfahrens.

Gleiche beziehungsweise gleich wirkende Bauteile sind mit gleichen Bezugszeichen beziffert. Sich wiederholende Bauteile sind nicht in jeder Figur gesondert bezeichnet.

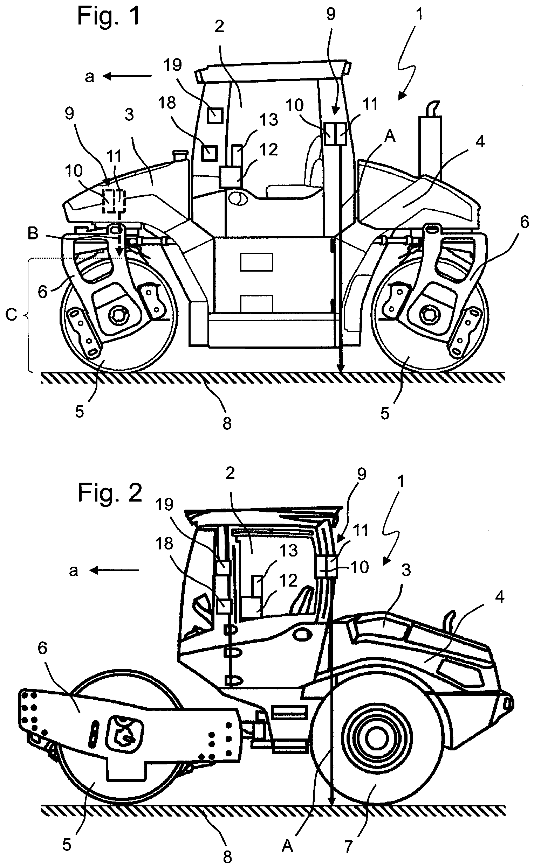

Die Figuren 1 und 2 zeigen Straßenwalzen 1, genauer eine Tandemwalze in Figur 1 und einen Walzenzug in Figur 2. Die Straßenwalzen 1 weisen einen Fahrerstand 2 und einen Maschinenrahmen 3 auf. Ferner umfassen sie ein Antriebsaggregat 4, das üblicherweise als Dieselmotor ausgebildet ist. Die Tandemwalze aus Figur 1 umfasst zwei Walzenbandagen 5, die jeweils über ein Bandagenlager 6 mit dem Maschinenrahmen 3 verbunden sind. Der Walzenzug aus Figur 2 weist eine Walzenbandage 5 und ein Rad 7 auf. Im Arbeitsbetrieb bewegen sich die Straßenwalzen 1 in oder entgegen der Arbeitsrichtung a über den Boden 8 und verdichten diesen mit ihren Walzenbandagen 5.

Die Straßenwalzen 1 weisen eine Sensoreinrichtung 9 auf, die einen Höhenreferenzsensor 10 und einen Abstandssensor 11 umfasst. Der Höhenreferenzsensor 10 ist dazu ausgebildet, seine Höhenlage in Relation zu einer Höhenreferenz zu ermitteln. Beispielsweise ermittelt der Höhenreferenzsensor 10 seine Position in Relation zu einer Höhenreferenzstation, wie sie nachstehend noch näher beschrieben wird. Der Abstandssensor 11 ist zur Ermittlung des Abstandes A zum Boden 8 ausgebildet. Da der Höhenreferenzsensor 10 und der Abstandssensor 11 gemeinsam auf gleicher Höhe am Fahrerstand 2 der Straßenwalze 1 angeordnet sind, ist der vom Abstandssensor 11 gemessene Abstand A zum Boden 8 gleichzeitig der Abstand des Höhenreferenzsensors 10 zum Boden 8. In Figur 1 ist eine alternative Anordnung der Sensoreinrichtung 9 gestrichelt angedeutet, in der die Sensoreinrichtung 9 vertikal über der Walzenbandage 5 angeordnet ist. In dieser Ausführungsform bestimmt der Abstandssensor 11 den Abstand B zum oberen Scheitel der Walzenbandage 5. Dieser gemessene Abstand B muss dann mit dem Durchmesser C der Walzenbandage 5 addiert werden, um insgesamt den Abstand des Abstandssensors 11 und damit auch des Höhenreferenzsensors 10 vom Boden 8 zu ermitteln. Ein Neigungssensor 18 ist vorgesehen, um die Höhenlage des Höhenreferenzsensors 10 gegenüber der Höhenreferenz bei geneigtem Boden 8 zu kompensieren. Der Neigungssensor 18 ist dazu ausgebildet, eine Längs- und/oder Querneigung der Straßenwalze 1 zu detektieren und auch deren Ausmaß festzustellen.

Darüber hinaus weisen die Straßenwalzen 1 gemäß den Figuren 1 und 2 ebenfalls eine Steuereinrichtung 12 auf, die mit der Sensoreinrichtung 9 und dem Neigungssensor 18 verbunden ist und deren Messergebnisse aufnimmt und speichert. Die Steuereinrichtung 12 ist beispielsweise in den Bordcomputer der Straßenwalzen 1 integriert und weist eine Software auf, die es der Steuereinheit 12 ermöglicht, das beschriebene Verfahren durchzuführen. Beispielsweise berechnet die Steuereinrichtung 12 den Abstand der Sensoreinrichtung 9 zum Boden 8 und berücksichtigt diesen bei der Berechnung der Höhenlage des Höhenreferenzsensors 10 im Vergleich zur Höhenreferenz. Auch die vom Neigungssensor 18 gemessene Neigung der Straßenwalze 1 wird von der Steuereinrichtung 12 genutzt, um die Höhenlage des Höhenreferenzsensors 10 unabhängig von einem von der Horizontalen abweichenden Verlauf des Bodens 8 zuverlässig zu ermitteln. Insgesamt ist die Steuereinrichtung 12 daher dazu eingerichtet, anhand der Messwerte der Sensoreinrichtung 9 und des Neigungssensor 18 ein Höhenprofil des Bodens 8 zu erstellen. Aus einem Höhenprofil des Bodens 8, dass vor der Bebauung mit der Einbauschicht aufgenommen wurde und einem Höhenprofil der mit der Einbauschicht bebauten Fläche berechnet die Steuereinrichtung 12 die Schichtdicke der Einbauschicht. Die Steuereinrichtung 12 kann ebenfalls mit einer Anzeigeeinrichtungen 13 verbunden sein, auf der die Steuereinrichtung 12 dem Bediener der Straßenwalze 1 eine dreidimensionale Topographie der bestimmten Höhenlagen anzeigt. Schließlich weisen die Straßenwalzen 1 ebenfalls eine Sendeeinheit 19 auf, über die die Steuereinheit 12 die ermittelte Dicke der Einbauschicht kabellos an weitere Baumaschinen auf derselben Baustelle, beispielsweise einen Straßenfertiger, übermittelt.

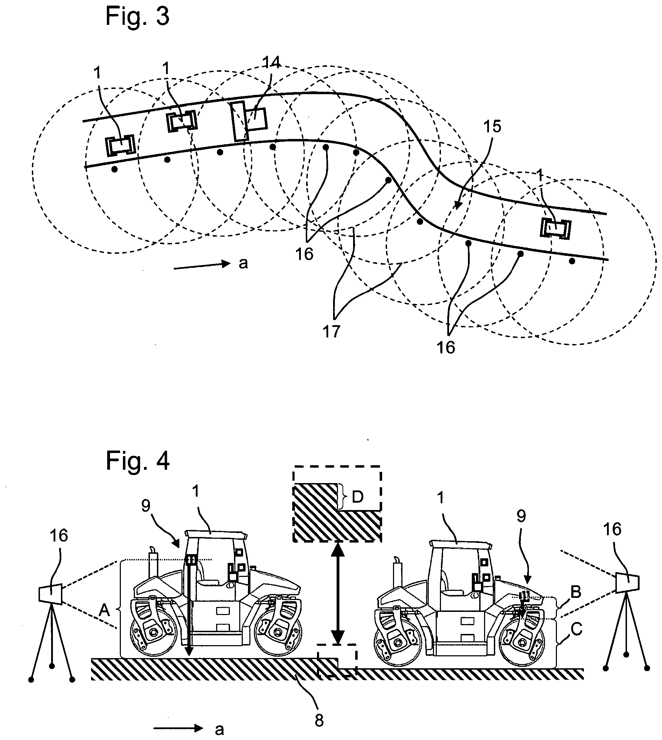

Figur 3 zeigt den Aufbau eines Höhenreferenzsystems. Konkret zeigt Figur 3 einen geplanten Straßenverlauf 15, auf dem von einem Straßenfertiger 14 eine Asphaltschicht aufgebracht wird. Der Straßenfertiger 14 fährt in Arbeitsrichtung a den Straßenverlauf 15 entlang und verteilt Einbaumaterial, beispielsweise Asphalt, über dessen gesamte Breite. Vor dem Straßenfertiger 14 fährt eine Straßenwalze 1 entlang dem Straßenverlauf 15 und verdichtet den Boden 8, so dass dieser für das Auftragen der Einbauschicht durch den Straßenfertiger 14 vorbereitet wird. Hinter dem Straßenfertiger 14 fahren ebenfalls Straßenwalzen 1 über die vom Straßenfertiger 14 verteilte Einbauschicht und verdichten diese bis zu einem optimalen Verdichtungsgrad. Entlang dem Straßenverlauf 15 ist eine Vielzahl von Höhenreferenzstationen 16 angeordnet, die beispielsweise als Lasertransceiver ausgebildet sind. Die Höhenreferenzstationen 16 bilden eine an sich im Stand der Technik bekannte Höhenreferenz für die an den Straßenwalzen 1 und gegebenenfalls ebenfalls am Straßenfertiger 14 angeordneten Höhenreferenzsensoren 10. Dafür senden die Höhenreferenzstationen 16 beispielsweise Lasersignale aus, die es ermöglichen, sowohl den horizontalen Abstand der Straßenwalzen 1 oder des Straßenfertigers 14 von den Höhenreferenzstationen 16 als auch die Höhenlage der Straßenwalzen 1 beziehungsweise des Straßenfertigers 14 in Bezug auf die Höhenreferenzstationen 16 zu ermitteln. Da die Signale der Höhenreferenzstationen 16 nur eine begrenzte Reichweite haben, die in der Figur 3 durch den Höhenreferenzradius 17 angedeutet ist, sind mehrere Höhenreferenzstationen 16 entlang des Straßenverlaufs 15 verteilt angeordnet, so dass die Straßenwalzen 1 und auch der Straßenfertiger 14 über die gesamte Fläche des Straßenverlaufs 15 hinweg ihre vertikale Höhe in Bezug zu Höhenreferenzstationen 16 und ihre horizontale Position im Bezug zu diesen Stationen bestimmen können. Alternativ zur Bestimmung des Horizontalabstandes zu den Höhenreferenzstationen 16 kann ebenfalls vorgesehen sein, dass die Straßenwalzen 1 und/oder der Straßenfertiger 14 ihre Position satellitengestützt, beispielsweise durch GPS, bestimmen, und die Höhenreferenzstationen 16 lediglich zur Bestimmung der vertikalen Höhe beziehungsweise der Höhenlage im Vergleich zu den Höhenreferenzstationen 16 genutzt werden. Die Verwendung und die Positionierung derartiger Höhenreferenzstationen 16 ist im Stand der Technik bekannt und wird hier daher nicht näher erläutert.

Figur 4 zeigt die Vermessung beziehungsweise Ermittlung der Höhenprofile der zu bebauenden Fläche beziehungsweise der bereits mit einer Einbauschicht bebauten Fläche durch eine Straßenwalze 1. Die rechte Seite der Figur 4 zeigt eine Straßenwalze 1 auf dem Straßenverlauf 15 bevor die Einbauschicht durch den Straßenfertiger 14 eingebaut wurde. Die Straßenwalze 1 überfährt diesen Bereich, um den Boden 8 auf den Einbau der Einbauschicht vorzubereiten. Dabei wird der Boden verdichtet, weshalb sich die Relativhöhe des Bodens im Vergleich zu Höhenreferenzstation 16 ändert. Mit der letzten Überfahrt der Straßenwalze 1 hat der Boden 8 seine finale Höhe erreicht, so dass die Straßenwalze 1 an diesem Punkt die Höhe des Bodens 8 vor dem Einbau der Einbauschicht vermessen kann. Die Straßenwalze 1 befindet sich innerhalb des Höhenreferenzradius 17 der Höhenreferenzstation 16 auf der rechten Seite der Figur. Gemeinsam bilden die Straßenwalze 1 und die Höhenreferenzstation 16 ein Walzsystem. Im gezeigten Ausführungsbeispiel nutzt das Höhenreferenzsystem Höhenreferenzstationen 16, die ein Lasersignal in einem kegelförmigen Raum ausstrahlen und innerhalb dieses Raums den Höhenreferenzsensor 10 detektieren. Die Höhenreferenzstation 16 ist dabei in im Stand der Technik bekannter Weise sowohl dazu fähig, die relative Höhe des Höhenreferenzsensors 10 zur Höhenreferenzstation 16 als auch den horizontalen Abstand des Höhenreferenzsensors 10 an der Straßenwalze 1 zur Höhenreferenzstation 16 zu detektieren. Über ein Triangulationsverfahren ist so die Position der Straßenwalze 1 beziehungsweise des Höhenreferenzsensors 10 im Raum gegenüber der Höhenreferenzstation 16 bekannt. Wie ebenfalls aus der Figur 4 hervorgeht, weist die Straßenwalze 1 auf der rechts in der Figur gezeigten unbebauten Fläche des Bodens 8 einen Abstandssensor 11 auf, der den Abstand B zum oberen Scheitel der Walzenbandage 5 der Straßenwalze 1 misst. Durch Addition des Bandagendurchmessers C wird daraus der Abstand des Höhenreferenzsensors 10 zum Boden 8 errechnet. Aus der Höhenlage des Höhenreferenzsensors 10 und dessen Abstand zum Boden 8 wiederum kann die Höhenlage des Bodens 8 an demjenigen Punkt errechnet werden, an dem die Straßenwalze 1 sich befindet. Aus einer kontinuierlichen Messung dieser Höhenlage wird ein flächiges, dreidimensionales Höhenprofil des Bodens 8 erstellt.

Auf der linken Seite der Figur 4 ist wiederum eine Straßenwalze 1 dargestellt, bei der ebenfalls die Relativhöhe des Höhenreferenzsensors 10 zur Höhenreferenzstation 16 detektiert wird. Auch hier ist ebenfalls ein Abstandssensor 11 vorhanden, der den Abstand A des Höhenreferenzsensors 10 zum Boden 8 misst. Analog zur vorstehenden Beschreibung der Straßenwalze 1 auf der rechten Seite der Figur 4 wird auch hier ein Höhenprofil des Bodens 8 erstellt, und zwar während der letzten Überfahrt der Straßenwalze 1, bei der der Boden 8 optimal verdichtet ist und sich die Dicke D der Einbauschicht so gut wie nicht mehr ändert. Auf der linken Seite der Figur 4 ist allerdings die Einbauschicht des Straßenbelages bereits durch den Straßenfertiger 14 eingebaut worden. Die Höhe der links gezeigten bebauten Fläche gegenüber der rechts gezeigten unbebauten Fläche unterscheidet sich daher genau um die Dicke D der Einbauschicht, wie in Figur 4 angedeutet. Aus einem Vergleich der vor dem Einbau der Einbauschicht an einer Position des Bodens 8 gemessenen Höhe im Vergleich zur Höhenreferenzstation 16 mit der nach dem Einbau der Einbauschicht an derselben Position des Bodens 8 gemessenen Höhe im Vergleich zur Höhenreferenzstation 16 kann die Dicke D der Einbauschicht ermittelt werden. Dies geschieht durch eine Subtraktion der Höhe des Bodens 8 nach dem Einbau der Einbauschicht minus die Höhe des Bodens 8 vor dem Einbau der Einbauschicht. Durch die Erstellung der dreidimensionalen Höhenprofile vor und nach dem Einbau können auch diese direkt voneinander abgezogen werden, so das ein dreidimensionales Bild beziehungsweise eine Topographie der Einbauschicht mit ihrer Schichtdicke D an jedem einzelnen Punkt gewonnen wird. Fehler durch die Vibration der Straßenwalzen 1 oder deren Federung im Arbeitsbetrieb werden durch die direkte Messung des Abstandes zum Boden 8 durch den Abstandssensor 11 kompensiert.

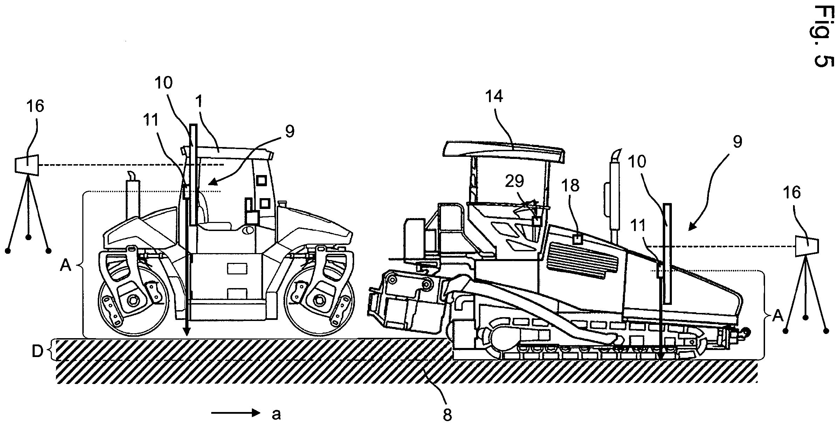

Figur 5 zeigt ebenfalls die Vermessung beziehungsweise Ermittlung der Höhenprofile der bebauten und der unbebauten Fläche, im Unterschied zur Figur 4 allerdings durch einen Straßenfertiger 14 und eine Straßenwalze 1. Der Straßenfertiger 14 fährt auf der von den Straßenwalzen 1 vorbereiteten Fläche des Bodens 8 und baut die Einbauschicht ein. Auch der Straßenfertiger 14 kann daher wie vorstehend beschrieben das Höhenprofil der unbebauten Fläche vermessen beziehungsweise detektieren. Dafür weist der Straßenfertiger 14 eine Sensoreinrichtung 9 auf, wie vorstehend beschrieben. Im gezeigten Ausführungsbeispiel ist die Sensoreinrichtung 9 und insbesondere der Höhenreferenzsensor 10 zur Verwendung mit Höhenreferenzstationen 16 ausgebildet, die keinen räumlichen Kegel, sondern eine Ebene mit ihren Lasersignalen abdecken und den Höhenreferenzsensor 10 innerhalb dieser Ebene detektieren. Um Höhenunterschiede auszugleichen, ist der Höhenreferenzsensor 10 daher als vertikale Stange ausgebildet, über deren Längsrichtung die von der Höhenreferenzstation 16 erstellte Laserebene detektiert wird, wie im Stand der Technik an sich bereits bekannt. Auch mit diesem Höhenreferenzsystem kann über ein Triangulierungsverfahren die Position des Straßenfertigers 14 und auch der Straßenwalze 1 im Raum bestimmt werden. Ansonsten stimmt die Sensoreinrichtung 9 gemäß Figur 5 mit den vorherigen Sensoreinrichtungen 9 überein, insbesondere bezüglich der Bestimmung des Abstands A zum Boden 8 über den Abstandssensor 11. Der Straßenfertiger 14 erstellt also das dreidimensionale Höhenprofil der unbebauten Fläche unmittelbar bevor er die Einbauschicht einbaut. Das dreidimensionale Höhenprofil der bebauten Fläche im optimal verdichteten Zustand wird wiederum von einer dem Straßenfertiger 14 folgenden Straßenwalze 1 vermessen. Die Dicke D der Einbauschicht wird wie vorstehend bereits beschrieben durch die Differenzbildung zwischen den beiden Höhenprofilen ermittelt. Auf diese Weise ist die Schichtdicke D an jedem Punkt der eingebauten Fläche bekannt.

Insbesondere ermöglicht die Erfindung dadurch eine Rückkoppelung beziehungsweise ein Feedback der von der Straßenwalze 1 festgestellten Schichtdicke D an den Straßenfertiger 14. Dafür weist der Straßenfertiger 14 eine Empfangseinheit 29 auf, mit der er kabellos die von der Straßenwalze 1 ermittelte Schichtdicke D empfangen kann. Alternativ kann der Straßenfertiger 14 auch die gemessenen Rohdaten empfangen und die Auswertung selber durchführen. Je nachdem, ob die bestimmte Schichtdicke D über oder unter den minimalen Anforderungen an die Schichtdicke liegt, kann der Straßenfertiger 14 die von ihm ausgebrachte Menge an Einbaumaterial pro Flächeneinheit anpassen. Auf diese Weise wird ermöglicht, dass nicht unnötig viel Einbaumaterial auf die zu bebauende Fläche ausgebracht wird, wodurch der Einbau insgesamt wirtschaftlicher und umweltschonender abläuft. Durch die Kompensation der durch die Vibrationen oder Schwingungen der Maschinen eingebrachten Messfehler durch die kontinuierliche Messung des Abstandes des Höhenreferenzsensors 10 zum Boden 8 durch den Abstandssensor 11 wird durch die Erfindung eine sehr exakte Messung der Schichtdicke D mit einem minimalen Messfehler im Millimeterbereich ermöglicht.

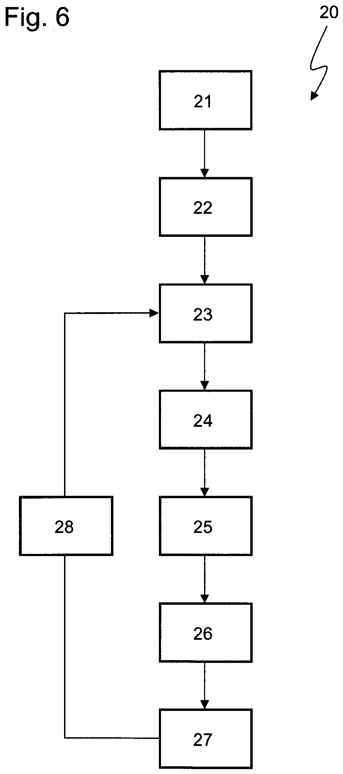

Figur 6 zeigt den Ablauf des Verfahrens 20. Das Verfahren 20 beginnt im Schritt 21 mit dem Etablieren einer Höhenreferenz, also beispielsweise mit dem Aufstellen der Höhenreferenzstationen 16 entlang der zu bebauenden Fläche, beispielsweise entlang dem Straßenverlauf 15. Wie eine derartige Höhenreferenz unter Verwendung von Lasertransceivern verwirklicht wird, ist im Stand der Technik bekannt und wird daher nicht näher erläutert. Im Schritt 22 erfolgt das Erstellen eines Höhenprofils der zu bebauenden Fläche, nachdem diese für den Einbau der Einbauschicht vorbereitet wurde. Das Höhenprofil der zu bebauenden Fläche dient dazu, als Nullpunkt beziehungsweise Nullfläche zu dienen, so dass eine über dieses Höhenprofil hinausgehende Höhe als Schichtdicke D der Einbauschicht identifizierbar ist. Das Höhenprofil der zu bebauenden Fläche kann, wie vorstehend beschrieben, entweder durch eine Straßenwalze 1 bei ihrer letzten Überfahrt über den vorzubereitenden Boden oder alternativ vom Straßenfertiger 14 unmittelbar vor dem Einbau der Einbauschicht ermittelt werden. Im Schritt 23 des Verfahrens 20 erfolgt der Einbau der Einbauschicht. Der Straßenfertiger 14 fährt die zu bebauenden Fläche ab und überdeckt diese mit einer geglätteten und vorverdichteten Einbauschicht, beispielsweise Asphalt. Diese Schicht wird dann von den Straßenwalzen 1 verdichtet, bis ein optimaler Verdichtungsgrad erreicht wurde. Bei der letzten Überfahrt der Straßenwalze 1 über die eingebaute Schicht erfolgt im Schritt 24 das Messen der Höhenlage eines Höhenreferenzsensors 10 einer selbstfahrenden Straßenwalze 1 in Bezug zur Höhenreferenz. Dabei wird im Schritt 25 die Lage des Höhenreferenzsensors 10 in Bezug zum Boden 8 immer ebenfalls ermittelt, wodurch eine Fehlerkompensation für Schwingungen und Vibrationen der Straßenwalze 1 ermöglicht wird. Die Messung der Höhenlage des Höhenreferenzsensors 10 und dessen Lage in Bezug zum Boden wird für die gesamte Fläche der eingebauten Schicht durchgeführt, so dass insgesamt im Schritt 26 das Höhenprofil der bebauten Fläche erstellt werden kann, das sich durch die Dicke D der Einbauschicht vom Höhenprofil der unbebauten Fläche unterscheidet. Aus den beiden Höhenprofilen kann dann im Schritt 27 die Dicke D der Einbauschicht mit einer Genauigkeit im Millimeterbereich ermittelt werden. Mit der Information über die Schichtdicke D kann der Straßenfertiger 14 dann im Schritt 28 eine Anpassung der aktuellen Einbaudicke, also der Menge an Einbaumaterial, das vom Straßenfertiger 14 pro Flächeneinheit ausgebracht wird, vornehmen. Auf diese Weise ermöglicht die Erfindung einen besonders wirtschaftlichen Einbauvorgang.

## Patentansprüche

1. Verfahren (20) zur Bestimmung einer Dicke einer durch einen Straßenfertiger (14) eingebauten Einbauschicht, umfassend die Schritte:
a) Etablieren (21) einer Höhenreferenz,
b) Erstellen (22) eines Höhenprofils einer zu bebauenden Fläche durch eine oder mehrere Straßenwalzen (1), die eine Verdichtung zur Vorbereitung der Fläche durchführen, oder durch den über die zu bebauende Fläche fahrenden Straßenfertiger (14),
c) Einbau (23) der Einbauschicht durch den Straßenfertiger (14),
d) Messen (24) einer Höhenlage eines Höhenreferenzsensors (10) einer selbstfahrenden Straßenwalze (1), die die Einbauschicht hinter dem Straßenfertiger (14) verdichtet, in Bezug zur Höhenreferenz,
e) Messen (25) der Lage des Höhenreferenzsensors (10) der selbstfahrenden Straßenwalze (1) aus Schritt d) in Bezug zu einer Standfläche der Straßenwalze (1),
f) Ermitteln (26) eines Höhenprofils der bebauten Fläche aus der Höhenlage des Höhenreferenzsensors (10) in Bezug zur Höhenreferenz und der Lage des Höhenreferenzsensors (10) in Bezug zur Standfläche der Straßenwalze (1), und
g) Ermitteln (27) der Dicke (D) der Einbauschicht aus den beiden Höhenprofilen.

2. Verfahren (20) nach Anspruch 1, wobei ein Anpassen (28) der aktuellen Einbaudicke durch den Straßenfertiger (14) anhand der ermittelten Dicke (D) der Einbauschicht erfolgt.

3. Selbstfahrende Straßenwalze (1), insbesondere Tandemwalze oder Walzenzug, zur Verdichtung eines Bodens (8) in einer Arbeitsrichtung (a), mit
- einem Maschinenrahmen (3),
- einem Antriebsaggregat (4), und
- einer Steuereinrichtung (12),
wobei eine Sensoreinrichtung (9) zur Bestimmung einer Dicke (D) einer Einbauschicht vorgesehen ist, wobei die Sensoreinrichtung (9) einen Höhenreferenzsensor (10) und einen Abstandssensor (11) umfasst, und
wobei der Höhenreferenzsensor (10) zur Messung seiner Höhenlage in Bezug zu einer Höhenreferenz ausgebildet ist, **dadurch gekennzeichnet, dass** der Abstandssensor (11) zur Messung der Lage des Höhenreferenzsensors (10) in Bezug auf eine Standfläche der Straßenwalze (1) ausgebildet ist, und dass die Steuereinrichtung (12) dazu ausgebildet ist, aus den Messungen der Sensoreinrichtung (9) und einer vorgegebenen Referenzhöhe, welche ein Höhenprofil einer zu bebauenden Fläche umfasst, wobei das Höhenprofil eine dreidimensionale Höhenlage einer Oberfläche der zu bebauenden Fläche gegenüber der Höhenreferenz beinhaltet, die Dicke (D) der Einbauschicht zu ermitteln.

4. Selbstfahrende Straßenwalze (1) nach Anspruch 3,
**dadurch gekennzeichnet,**
**dass** der Abstandssensor (11) dazu ausgebildet ist, den senkrechten Abstand (A) zwischen dem Höhenreferenzsensor (10) und dem Boden (8) zu bestimmen.

5. Selbstfahrende Straßenwalze (1) nach einem der Ansprüche 3-4,
**dadurch gekennzeichnet,**
**dass** der Abstandssensor (11) dazu ausgebildet ist, den senkrechten Abstand (B) zwischen dem Höhenreferenzsensor (10) und einer Walzenbandage (5) der Straßenwalze (1), insbesondere dem vom Boden (8) abgewandten Scheitel der Walzenbandage (5), zu bestimmen, wobei die Steuereinrichtung (12) dazu ausgebildet ist, den Durchmesser (C) der Walzenbandage (5) bei der Ermittlung der Dicke (D) der Einbauschicht zu berücksichtigen.

6. Selbstfahrende Straßenwalze (1) nach einem der Ansprüche 3-5,
**dadurch gekennzeichnet,**
**dass** ein Neigungssensor (18) vorhanden ist, der eine Neigung der Straßenwalze (1) in und/oder quer zur Arbeitsrichtung (a) misst, und dass die Steuereinrichtung (12) dazu ausgebildet ist, die Neigung der Straßenwalze (1) bei der Ermittlung der Dicke (D) der Einbauschicht zu berücksichtigen.

7. Selbstfahrende Straßenwalze (1) nach einem der Ansprüche 3-6,
**dadurch gekennzeichnet,**
**dass** die Neigung des Höhenreferenzsensors (10) in und/oder quer zur Arbeitsrichtung (a) anhand von topographischen Daten der Einbauschicht ermittelt wird, und dass die Steuereinrichtung (12) dazu ausgebildet ist, die Neigung des Höhenreferenzsensors (10) bei der Ermittlung der Dicke (D) der Einbauschicht zu berücksichtigen.

8. Selbstfahrende Straßenwalze (1) nach einem der Ansprüche 3-7,
**dadurch gekennzeichnet,**
**dass** der Höhenreferenzsensor (10) und/oder der Abstandssensor (11) schwingungsentkoppelt an der Straßenwalze (1) angeordnet ist/sind.

9. Selbstfahrende Straßenwalze (1) nach einem der Ansprüche 4-8,
**dadurch gekennzeichnet,**
**dass** der Höhenreferenzsensor (10) und der Abstandssensor (11) derart an der Straßenwalze (1) angeordnet sind, dass der Abstand (A) des Höhenreferenzsensors (10) und des Abstandssensors (11) vom Boden (8) gleich ist.

10. Selbstfahrende Straßenwalze (1) nach einem der Ansprüche 3-9,
**dadurch gekennzeichnet,**
**dass** der Höhenreferenzsensor (10) und der Abstandssensor (11) als gemeinsame Baueinheit an der Straßenwalze (1) angeordnet und starr miteinander verbunden sind.

11. Selbstfahrende Straßenwalze (1) nach einem der Ansprüche 3-10,
**dadurch gekennzeichnet,**
**dass** der Höhenreferenzsensor (10) als Laserhöhensensor ausgebildet ist und/oder der Abstandssensor (11) als Laserdistanzsensor ausgebildet ist.

12. Selbstfahrende Straßenwalze (1) nach einem der Ansprüche 3-11,
**dadurch gekennzeichnet,**
**dass** die Steuereinrichtung (12) dazu ausgebildet ist, eine dreidimensionale Topografie der Dicke (D) der Einbauschicht zu erstellen, und eine Anzeigeeinrichtung (13) umfasst, die dazu ausgebildet ist, dem Bediener der Straßenwalze (1) die erstellte Topografie anzuzeigen.

13. Selbstfahrende Straßenwalze (1) nach einem der Ansprüche 3-12,
**dadurch gekennzeichnet,**
**dass** eine Sendeeinheit (19) zur drahtlosen Kommunikation vorhanden ist, und dass die Steuereinheit (12) dazu ausgebildet ist, die ermittelte Dicke (D) der Einbauschicht über die Sendeeinheit (19) an einen Straßenfertiger (14) zu übermitteln.

14. Walzsystem zum Einbau einer Einbauschicht, umfassend eine selbstfahrende Straßenwalze (1) nach Anspruch 13 und einen Straßenfertiger (14),
**dadurch gekennzeichnet,**
**dass** der Straßenfertiger (14) dazu ausgebildet ist, die von der Straßenwalze (1) übermittelte Dicke (D) der Einbauschicht zu empfangen und anhand dieser Daten die aktuelle Einbaudicke der Einbauschicht anzupassen.

15. Walzsystem zur Bestimmung der Dicke der durch einen Straßenfertiger (14) eingebauten Einbauschicht, umfassend eine selbstfahrende Straßenwalze (1) nach einem der Ansprüche 3-13 und wenigstens eine von der selbstfahrenden Straßenwalze (1) separate, stationäre Höhenreferenzstation (16).

## Claims

1. A method (20) for determining the thickness of the paved layer paved by a road paver (14) by means of a self-propelled road roller (1), comprising the steps:
a) establishing (21) a height reference;
b) creating (22) a height profile of the surface to be paved by one or more road rollers (1) by compaction to prepare the surface or by the road paver (14) driving over the surface to be paved;
c) paving (23) the paved layer by the road paver (14);
d) measuring (24) the elevation of a height reference sensor (10) of a self-propelled road roller (1), which compacts the paving layer behind the road paver (14) in relation to the height reference;
e) measuring (25) the position of the height reference sensor (10) of the self-propelled road roller (1) from step (d) in relation to a ground surface of the road roller (1);
f) determining (26) a height profile of the paved surface from the position of the height reference sensor (10) in relation to the height reference and the position of the height reference sensor (10) in relation to the ground surface of the road roller (1); and
g) determining (27) the thickness (D) of the paved layer from the two height profiles.

2. The method (20) according to claim 1, wherein the road paver (14) adjusts (28) the current paving thickness based on the determined thickness (D) of the paved layer

3. A self-propelled road roller (1), in particular a tandem roller or a single-drum roller, for compacting a ground (8) in a working direction (a), with
- a machine frame (3);
- a drive unit (4); and
- a control device (12)(
wherein
a sensor device (9) for determining the thickness (D) of a paved layer is provided, the sensor device (9) comprising a height reference sensor (10) and a distance sensor (11), and wherein the height reference sensor (10) is configured to determine its height position in relation to a height reference,
**characterized in that**
the distance sensor (11) is configured to determine the thickness of the paved layer (D) with the height position of the height reference sensor (10) in relation to the ground surface of the road roller (1), and that the control device (12) is configured to determine the thickness (D) of the paved layer from the measurements of the sensor device (9) and a predetermined reference height, which comprises a height profile of a surface to be paved, wherein the height profile includes a three-dimensional height position of a surface to be paved in relation to the height reference.

4. The self-propelled road roller (1) according to claim 3,
**characterized in that**
the distance sensor (11) is configured to determine the vertical distance (A) between the height reference sensor (10) and the ground (8).

5. The self-propelled road roller (1) according to one of claims 3 to 4,
**characterized in that**
the distance sensor (11) is configured to determine the vertical distance (B) between the height reference sensor (10) and a roller drum (5) of the road roller (1), in particular the apex of the roller drum (5) facing away from the ground (8), the control device (12) being configured to take the diameter (C) of the roller drum (5) into account when determining the thickness (D) of the paved layer.

6. The self-propelled road roller (1) according to one of claims 3 to 5,
**characterized in that**
an inclination sensor (18) is provided which measures an inclination of the road roller (1) in and/or transversely to the working direction (a), and that the control device (12) is configured to take the inclination of the road roller (1) into account when ascertaining the thickness (D) of the paved layer.

7. The self-propelled road roller (1) according to any one of claims 3 to 6,
**characterized in that**
the inclination of the height reference sensor (10) in and/or transversely to the working direction (a) is determined based on topographic data of the paved layer, and that the control device (12) is configured to take the inclination of the height reference sensor (10) into account when determining the thickness (D) of the paved layer.

8. The self-propelled road roller (1) according to one of claims 3 to 7,
**characterized in that**
the height reference sensor (10) and/or the distance sensor (11) is/are arranged on the road roller (1) in an oscillation-decoupled manner.

9. The self-propelled road roller (1) according to one of claims 4 to 8,
**characterized in that**
the height reference sensor (10) and the distance sensor (11) are arranged on the road roller (1) in such a manner that the distance (A) of the height reference sensor (10) and of the distance sensor (11) from the ground (8) is the same.

10. The self-propelled road roller (1) according to one of claims 3 to 9,
**characterized in that**
the height reference sensor (10) and the distance sensor (11) are arranged on the road roller (1) as a single assembly unit and are rigidly connected with each other.

11. The self-propelled road roller (1) according to one of claims 3 to 10,
**characterized in that**
the height reference sensor (10) is designed as a laser height sensor and/or the distance sensor (11) is designed as a laser distance sensor.

12. The self-propelled road roller (1) according to one of claims 3 to 11,
**characterized in that**
the control device (12) is configured to create a three-dimensional topography of the thickness (D) of the paved layer, and that it comprises a display device (13) configured to display the created topography to the operator of the road roller (1).

13. The self-propelled road roller (1) according to one of claims 3 to 12,
**characterized in that**
a transmission unit (19) for wireless communication is provided, and that the control unit (12) is configured to transmit the ascertained thickness (D) of the paved layer via said transmission unit (19) to a road paver (14).

14. A roller system for paving a paved layer, comprising a self-propelled road roller (1) according to claim 13 and a road paver (14),
**characterized in that**
the road paver (14) is configured to receive the thickness (D) of the paved layer transmitted from the road roller (1) and to adjust the current paving thickness of the paved layer based on these data.

15. A roller system for determining the thickness of the paved layer paved by a road paver (14), comprising a self-propelled road roller (1) according to one of claims 3 to 13 and at least one stationary height reference station (16) separate from the self-propelled road roller (1).

## Revendications

1. Procédé (20) de détermination de l'épaisseur de la couche de revêtement déposée par un finisseur routier (14) au moyen d'un rouleau compresseur automoteur (1), comprenant les étapes consistant à :
a) établir (21) une référence de hauteur ;
b) créer (22) un profil de hauteur de la surface à recouvrir au moyen d'un ou plusieurs rouleaux compresseurs (1) par compactage pour préparer la surface, ou bien au moyen du finisseur routier (14) circulant sur la surface à recouvrir ;
c) poser (23) la couche de revêtement avec le finisseur routier (14) ;
d) mesurer (24) la hauteur d'un capteur (10) de référence de hauteur d'un rouleau compresseur automoteur (1) qui compacte la couche de revêtement derrière le finisseur routier (14) par rapport à la référence de hauteur ;
e) mesurer (25) la position du capteur (10) de référence de hauteur du rouleau compresseur automoteur (1) à partir de l'étape d) par rapport à une surface au sol du rouleau compresseur (1) ;
f) déterminer (26) un profil de hauteur de la surface recouverte à partir de la position du capteur (10) de référence de hauteur par rapport à la référence de hauteur et de la position du capteur (10) de référence de hauteur par rapport à la surface au sol du rouleau compacteur (1) ; et
g) déterminer (27) l'épaisseur (D) de la couche de revêtement à partir des deux profils de hauteur.

2. Procédé (20) selon la revendication 1, dans lequel le finisseur routier (14) adapte (28) l'épaisseur de la couche de revêtement en cours sur la base de l'épaisseur déterminée (D) de la couche de revêtement.

3. Rouleau compresseur automoteur (1), en particulier rouleau tandem ou rouleau monocylindre, pour le compactage du sol (8) dans une direction de progression (a), avec :
- un châssis (3) de machine ;
- une unité d'entraînement (4) ; et
- un dispositif de commande (12)
dans lequel
un dispositif détecteur (9) pour déterminer l'épaisseur (D) d'une couche de revêtement est présent, le dispositif détecteur (9) comprenant un capteur (10) de référence de hauteur et un capteur de distance (11), et
dans lequel le capteur (10) de référence de hauteur est configuré pour déterminer sa position en hauteur par rapport à une référence de hauteur,
***caractérisé en ce que***
le capteur de distance (11) est configuré pour déterminer l'épaisseur de la couche de revêtement (D) avec la position en hauteur du capteur (10) de référence de hauteur par rapport à la surface au sol du rouleau compacteur (1), et ***en ce que*** le dispositif de commande (12) est configuré pour déterminer l'épaisseur (D) de la couche de revêtement à partir des mesures du dispositif de capteur (9) et d'une hauteur de référence prédéterminée, qui comprend un profil de hauteur d'une surface à recouvrir, dans lequel le profil de hauteur comprend une position en hauteur tridimensionnelle d'une surface à recouvrir en relation avec la référence de hauteur.

4. Rouleau compresseur automoteur (1) selon la revendication 3,
***caractérisé en ce que***
le capteur de distance (11) est configuré pour déterminer la distance verticale (A) entre le capteur (10) de référence de hauteur et le sol (8).

5. Rouleau compresseur automoteur (1) selon l'une quelconque des revendications 3 à 4,
***caractérisé en ce que***
le capteur de distance (11) est configuré pour déterminer la distance verticale (B) entre le capteur (10) de référence de hauteur et un cylindre (5) du rouleau compresseur (1), en particulier de l'apex du cylindre (5) à l'opposé du sol (8), le dispositif de commande (12) étant configuré pour prendre en compte le diamètre (C) du cylindre (5) lors de la détermination de l'épaisseur (D) de la couche de revêtement.

6. Rouleau compresseur automoteur (1) selon l'une quelconque des revendications 3 à 5,
***caractérisé en ce que***
un capteur d'inclinaison (18) est présent, qui mesure une inclinaison du rouleau compresseur (1) dans et/ou transversalement à la direction de progression (a), et ***en ce que*** le dispositif de commande (12) est configuré pour prendre en compte l'inclinaison du rouleau compresseur (1) lorsque l'on établit l'épaisseur (D) de la couche de revêtement.

7. Rouleau compresseur automoteur (1) selon l'une quelconque des revendications 3 à 6,
***caractérisé en ce que***
l'inclinaison du capteur (10) de référence de hauteur dans et/ou transversalement à la direction de progression (a) est déterminée sur la base de données topographiques de la couche de revêtement, et ***en ce que*** le dispositif de commande (12) est configuré pour prendre en compte l'inclinaison du capteur (10) de référence de hauteur lorsqu'est déterminée l'épaisseur (D) de la couche de revêtement.

8. Rouleau compresseur automoteur (1) selon l'une quelconque des revendications 3 à 7,
***caractérisé en ce que***
le capteur (10) de référence de hauteur et/ou le capteur (11) de distance est/sont disposé(s) sur le rouleau compresseur (1) de manière découplée vis-à-vis des oscillations.

9. Rouleau compresseur automoteur (1) selon l'une quelconque des revendications 4 à 8,
***caractérisé en ce que***
le capteur (10) de référence de hauteur et le capteur (11) de distance sont disposés sur le rouleau compresseur (1) d'une manière telle que la distance (A) du capteur (10) de référence de hauteur et du capteur de distance (11) par rapport au sol (8) soient les mêmes.

10. Rouleau compresseur automoteur (1) selon l'une quelconque des revendications 3 à 9,
***caractérisé en ce que***
le capteur (10) de référence de hauteur et le capteur (11) de distance sont disposés sur le rouleau compresseur (1) en tant qu'unité modulaire conjointe et sont reliés de manière rigide l'un à l'autre.

11. Rouleau compresseur automoteur (1) selon l'une quelconque des revendications 3 à 10,
***caractérisé en ce que***
le capteur (10) de référence de hauteur est conçu comme un capteur laser de hauteur et/ou le capteur (11) de distance est conçu comme un capteur de distance laser.

12. Rouleau compresseur automoteur (1) selon l'une quelconque des revendications 3 à 11,
***caractérisé en ce que***
le dispositif de commande (12) est configuré pour créer une topographie tridimensionnelle de l'épaisseur (D) de la couche de revêtement, et ***en ce qu**'*il comprend un dispositif d'affichage (13) configuré pour indiquer la topographie créée à l'opérateur du rouleau compresseur (1).

13. Rouleau compresseur automoteur (1) selon l'une quelconque des revendications 3 à 12,
***caractérisé en ce que***
une unité de transmission (19) pour une communication sans fil est prévue, et ***en ce que*** l'unité de commande (12) est configurée pour transmettre à un finisseur routier (14) l'épaisseur déterminée (D) de la couche de revêtement via ladite unité de transmission (19).

14. Système à rouleau(x) pour poser une couche de revêtement, comprenant un rouleau compresseur automoteur (1) selon la revendication 13 et un finisseur routier (14),
***caractérisé en ce que***
le finisseur routier (14) est configuré pour recevoir les données de l'épaisseur (D) de la couche de revêtement transmises depuis le rouleau compresseur (1) et à ajuster l'épaisseur courante de revêtement de la couche de revêtement sur la base de ces données.

15. Système à rouleau(x) pour déterminer l'épaisseur de la couche de revêtement déposée par un finisseur routier (14), comprenant un rouleau compresseur automoteur (1) selon l'une quel-conque des revendications 3 à 13 et au moins une station fixe (16) de référence de hauteur séparée du rouleau compresseur automoteur (1).
